# EUROPEAN PATENT APPLICATION

(11) **EP 4 672 717 A1**
(43) Date of publication of application: **31.12.2025**
(21) Application number: 25184022.9
(22) Date of filing: 19.06.2025
(51) Int. Cl.: H04L 67/1095, G08B 17/00, G08B 25/14, H04L 67/12, H04L 67/00

(54) **SYSTEM AND METHOD FOR DEVELOPMENT OF FIRE PANEL SYSTEM CONFIGURATION THROUGH NETWORKED CONFIGURATION UTILITY INSTANCES**

(30) Priority: 26.06.2024 US 202463664443 P
(71) Applicant: Kidde Fire Protection, LLC, Bradenton, FL 34202 (US)
(72) Inventor: DEVADASS, Vishnu Vardhan, 500081 Hyderabad (IN); DODLE, Suresh, 500081 Hyderabad (IN); THAKUR, Pavan Kumar Singh, 500081 Hyderabad (IN); RUHELA, Vishal Singh, 500081 Hyderabad (IN); JUKANTI, Arun Kumar, 500081 Hyderabad (IN)
(74) Representative: Dehns

(57) **Abstract**

Described herein is a system (102) and method (300) for development of fire panel system configuration through networked configuration utility instances. The system (102) receives one or more configuration utility instances related to one or more devices. The system simultaneously receives the configuration utility instances related to one or more implementations made by one or more users through one or more computing devices (106). The system (102) identifies a plurality of configuration utility instances among the configuration utility instances through one or more interrelated objects comprised in the plurality of configuration utility instances. The system (102) compares the identified plurality of configuration utility instances to identify a variation of data among the interrelated objects. The system (102) merges the data from the plurality of configuration utility instances to correspondingly synchronize the data among the plurality of configuration utility instances. The system (102) communicates the synced data to the computing devices (106) associated with the one or more users.

## Description

### BACKGROUND

Embodiments described herein relate to the field of emergency monitoring systems, and more particularly, to a system and method for the development of fire panel system configuration through networked configuration utility instances.

### SUMMARY

Described herein is a system for integration of networked utility instances. The system comprises a controller connected to one or more devices and configured to receive one or more configuration utility instanc es related to the one or more devices. One or more computing devices communicatively coupled to the controller and each other through a network and configured to communicate the one or more configuration utility instances to the controller. The controller comprises a processor with access to a memory storing instructions executable by the processor, which causes the controller to simultaneously receive the one or more configuration utility instances related to one or more implementations made by one or more users through the one or more computing devices. The controller identifies a plurality of configuration utility instances among the one or more configuration utility instances through one or more interrelated objects comprised in the plurality of configuration utility instances. The controller compares the identified plurality of configuration utility instances to identify a variation of data among the one or more interrelated objects. The controller merges the data from the plurality of configuration utility instances to correspondingly sync the data among the plurality of configuration utility instances. The controller communicates the synced data to the one or more computing devices associated with one or more users.

In one or more embodiments, the controller is configured to provide real-time notifications through the one or more computing devices to the one or more users based on the identified variation and enable merging of the data based on an acknowledgment received from the one or more users.

In one or more embodiments, the controller is configured to implement a communication framework that establishes secure communication between the one or more configuration utility instances.

In one or more embodiments, the controller is configured to identify the plurality of configuration utility instances through the one or more interrelated objects. The controller is configured to enable comparison of the one or more interrelated objects to determine a difference in the data of the one or more interrelated objects. The controller is configured to merge the data among the one or more interrelated objects based on the difference to correspondingly sync the data among the plurality of configuration utility instances.

In one or more embodiments, the controller is configured with a predefined logic that upon execution enables the controller to identify the variation of the data among the plurality of configuration utility instances and presents the variation to the one or more users.

In one or more embodiments, each of the one or more interrelated objects comprises an object structure for storing the data, so that the predefined logic writes a data value from the object structure to the other and merges the data.

In one or more embodiments, the controller is configured to authenticate the one or more configuration utility instances based on a registered identity of the one or more users.

In one or more embodiments, the one or more devices comprise one or more fire configuration panels connected to each other through a platform where the one or more users implement one or more system configurations related to the one or more fire configuration panels through each of the one or more configuration utility instances.

Also described herein is a system for integration of networked utility instances associated with a fire detection and alarm unit. The system comprises a controller configured to receive one or more configuration utility instances related to one or more fire configuration panels associated with the fire detection and alarm unit. One or more computing devices communicatively coupled to the fire detection and alarm unit and each other through a network, where the one or more computing devices are configured to communicate the one or more configuration utility instances to the controller. Said controller is connected to the fire detection and alarm unit, where the controller comprises a processor with access to a memory storing instructions executable by the processor, which causes the controller to simultaneously receive the one or more configuration utility instances made by one or more users through the one or more computing devices. The controller identifies a plurality of configuration utility instances among the one or more configuration utility instances through one or more interrelated objects comprised in the plurality of configuration utility instances. The controller compares the identified plurality of configuration utility instances to identify a variation of data among the one or more interrelated objects. The controller merges the data from the plurality of configuration utility instances to correspondingly sync the data among the plurality of configuration utility instances. The controller communicates the synced data to one or more computing devices associated with one or more users.

In one or more embodiments, the controller is configured to authenticate the one or more configuration utility instances based on a registered identity of the one or more users. The controller is configured to provide real-time notifications through the one or more computing devices to the one or more users based on the identified variation and enable merging of the data based on an acknowledgment received from the one or more users.

In one or more embodiments, the controller is configured with a predefined logic that upon execution, enables the controller to identify the variation of the data among the plurality of configuration utility instances and presents the variation to the one or more users.

In one or more embodiments, each of the one or more interrelated objects comprises an object structure for storing the data, so that the controller writes a data value from the object structure to the other and merges the data.

Described herein is a method for integration of networked utility instances. The method comprises simultaneously receiving, by a controller, one or more configuration utility instances related to one or more implementations made by one or more users through the one or more computing devices. The method comprises identifying, by the controller, a plurality of configuration utility instances among the one or more configuration utility instances through one or more interrelated objects comprised in the plurality of configuration utility instances. The method comprises comparing, by the controller, the identified plurality of configuration utility instances to identify a variation of data among the one or more interrelated objects. The method comprises merging, by the controller, the data from the plurality of configuration utility instances to correspondingly sync the data among the plurality of configuration utility instances. The method comprises communicating, by the controller, the synced data to one or more computing devices associated with one or more users.

In one or more embodiments, the method comprises, providing, by the controller, real-time notifications to the one or more users through the one or more computing devices based on the identified variation and enabling merging of the data based on an acknowledgment received from the one or more users.

In one or more embodiments, the method comprises, implementing, by the controller, a communication framework that facilitates secure communication between the one or more configuration utility instances.

In one or more embodiments, the method comprises, identifying, by the controller, the plurality of configuration utility instances through the one or more interrelated objects. The method comprises, enabling, by the controller, comparison of the one or more interrelated objects to determine a difference in the data of the one or more interrelated objects. The method comprises, merging, by the controller, the data among the one or more interrelated objects based on the difference to correspondingly sync the data among the plurality of configuration utility instances.

In one or more embodiments, the method comprises, identifying, by the controller, through a predefined logic that upon execution, enables the controller to identify the variation of the data among the plurality of configuration utility instances and presents the variation to the one or more users.

In one or more embodiments, each of the one or more interrelated objects comprises an object structure for storing the data so that the controller writes a data value from the object structure to the other and merges the data.

In one or more embodiments, the method comprises, authenticating, by the controller, the one or more configuration utility instances based on a registered identity of the one or more users.

In one or more embodiments, the method comprises, implementing, by the one or more users one or more system configurations related to one or more fire configuration panels through each of the one or more configuration utility instances where each of the one or more devices comprise the one or more fire configuration panels connected to each other through a platform.

The foregoing summary is illustrative only and is not intended to be in any way limiting. In addition to the illustrative aspects, embodiments, and features described above, further aspects, embodiments, features, and techniques of the subject disclosure will become more apparent from the following description taken in conjunction with the drawings.

### BRIEF DESCRIPTION OF THE DRAWINGS

The accompanying drawings are included to provide a further understanding of the invention. The drawings illustrate exemplary embodiments and, together with the description, serve to explain the principles of the invention. However, these embodiments are provided by way of example only.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 illustrates an exemplary network architecture of a system for the development of a fire panel system configuration through networked configuration utility instances.
FIG. 2 illustrates an exemplary processor diagram of the system of FIG. 1.
FIG. 3 illustrates an exemplary method flow diagram of the system of FIG. 1.

### DETAILED DESCRIPTION

The following is a detailed description of the embodiments depicted in the accompanying drawings. The embodiments are in such detail as to clearly communicate the invention. However, the amount of detail offered is not intended to limit the anticipated variations of these embodiments; on the contrary, the intention is to cover all modifications, equivalents, and alternatives to these embodiments falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

Fire panel system configuration is a complex process that requires a group of trained commissioning engineers to create different parts of the configuration using configuration utility software. Each of the commissioning engineers creates a configuration project and then deploys the configuration project on to the system configuration. A configuration project is a complex structure comprising different types of objects with intrinsic property values, and relationships with each other. When one or more users/commissioning engineers are making changes to the configuration project, the configuration project structure needs to be updated based on interrelated objects comprised in different parts of the configuration. Currently, there is no way to create different parts of the configuration project in parallel and simultaneously deploy the configuration project onto the system configuration.

There is therefore a need to provide an improved, efficient, and reliable solution to overcome the above-mentioned drawbacks, limitations, and shortcomings associated with existing fire panel system configurations.

While various embodiments described herein have focused on the development of a fire panel system configuration through networked configuration utility instances, however, the teachings herein are equally applicable to other project management systems involving networked configuration utility instances, and all such embodiments are well within the scope of this invention.

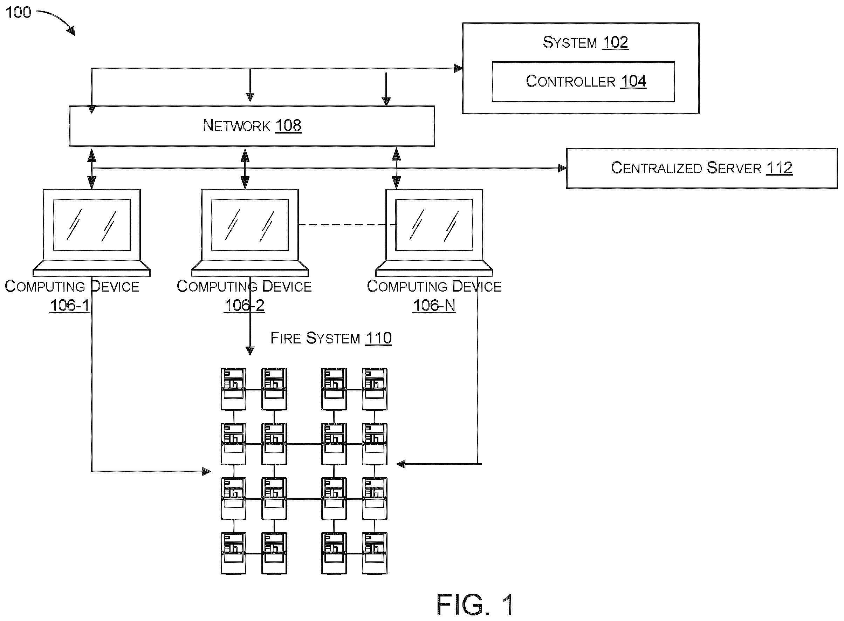

Referring to FIG. 1, the system 102 for the development of a fire panel system configuration through networked configuration utility instances is disclosed. The fire panel system configuration may include one or more fire panels connected to one or more devices and may be part of fire detection and notification systems. The fire panels may be positioned in schools, hospitals, hotels, banks, residential/commercial buildings, and various industries. The fire panels may be a central hub for monitoring, controlling, and responding to fire-related incidents. The fire panels may receive signals from devices, evaluate the authenticity of the signals, and provide an appropriate response. Further, the fire panels may include controllers that process the various signals and determine that a fire has occurred, and initiate an appropriate response by activating notification devices such as sirens, flashing lights to alert building occupants.

In one or more embodiments, the system 102 may be connected to one or more computing devices (106-1, 106-2 ...106-N) over a network 108. The computing devices 106 may include but not be limited to, a mobile, a laptop, a smartphone, a general-purpose computer, a desktop, a personal digital assistant, a tablet computer, and a mainframe computer. The computing devices 106 may be operated by various users or commissioning engineers. The computing devices 106 may be connected to one or more fire panels of a fire system 110. The fire system 110 may be a platform that may receive information associated with the fire panels. Further, the fire system 110 may be interchangeably referred to as a fire detection and alarm unit 110 throughout the disclosure. The commissioning engineers may create different parts of the configuration project associated with the fire panels and deploy the configuration project onto the system 102. For example, a commissioning engineer may work on one or more smoke detectors connected to the fire panel located in a building and update programs associated with the smoke detectors located on a specific floor in the building through the computing devices 106. Further, some commissioning engineers may work on alarm units connected to the fire panel located in a building and update programs associated with the alarm units located on specific floors in the building through the computing devices 106. The configuration project may include software programs comprising configuration management to create one or more configuration utility instances associated with the fire panels. The commissioning engineer may create a configuration utility instance associated with a modification of the devices connected to the fire panel. Further, the commissioning engineer may transmit the configuration utility instance to a controller 104 configured with the system 102.

In one or more embodiemnts, the controller 104 may be an internal or part of the computing devices 106. Further, in some embodiments, the controller 104 may also be part of a cloud-based server or a local server that may be different from a centralized server 112 (myEddie/cloud instance).

In one or more embodiments, the computing devices 106 may be connected to the the centralized server 112 that provides a licensing and an identity/access management system to one or more configuration utility instances based on an registered identity of the commissioning engineers. This may enable the one or more configuration utility instances to communicate with each other. The access management system may receive information from various commissioning engineers aand register their identity.

In one or more embodiments, the controller 104 may be connected to the system 102 and configured to process configuration utility instances related to fire panels. The system 102 may implement a communication framework that facilitates secure communication among the configuration utility instances based on the registered idenitity of the users/commisioing engineers. The system 102 may authenticate the configuration utility instances based on the registered identity of the users. The system 102 may authenticate the configuration utility instances through the registered identity of the users. For example, the communication framework may authenticate the users based on the registered identity of the users recorded in the centralized server 112. The users may be registered through the computing devices 106 connected over the network 108. The communication framework may identify all the configuration utility instances associated with the registered identity of the users.

In one or more embodiments, the devices may include but are not limited to smoke detectors, flame detectors, gas sensing detectors, automatic suppression systems, fire alarms, and automatic sprinkler fire suppression systems. The devices may be connected to each other through the platform 112 where the users operate the configuration management associated with the fire configuration panels through each of the configuration utility instances.

In one or more embodiments, the system 102 may simultaneously receive the configuration utility instances related to one or more implementations made by the users through the computing devices 106.

In one or more embodiments, the system 102 may identify a plurality of configuration utility instances among the configuration utility instances through one or more interrelated objects comprised in the plurality of configuration utility instances. Further, the system 102 may compare the identified plurality of configuration utility instances to identify a variation of data among the interrelated objects. The system 102 may be configured with a predefined logic that upon execution enables the system 102 to identify the variation of the data among the plurality of configuration utility instances and presents the variation to the users. The interrelated objects may comprise an object structure for storing the data so that the system 102 writes a data value from the object structure to the other and merges the data. The predefined logic may compare and find the differences between the object structures and write one data value from the object structure to the other to merge the data.

In one or more embodiments, the system 102 may provide real-time notifications through the computing devices 106 to the users based on the identified variation and enable merging of the data based on an acknowledgment received from the users.

In one or more embodiments, the system 102 may merge the data from the plurality of configuration utility instances to correspondingly sync the data between the plurality of configuration utility instances. The system 102 may communicate the synced data to the computing devices 106 associated with the users.

In one or more embodiments, the system 102 may receive the configuration utility instances and record (in a database) the configuration utility instances received for a predetermined period in a configuration project prior to merging the configuration utility instances. Further, the system 102 may allow reverting to any previous version of the configuration project based on a request made by the commissioning engineers through the computing devices 106. For example, if a recent version of the configuration project encounters an error, the previous version of the configuration project may be compared to the recent version for troubleshooting in real time.

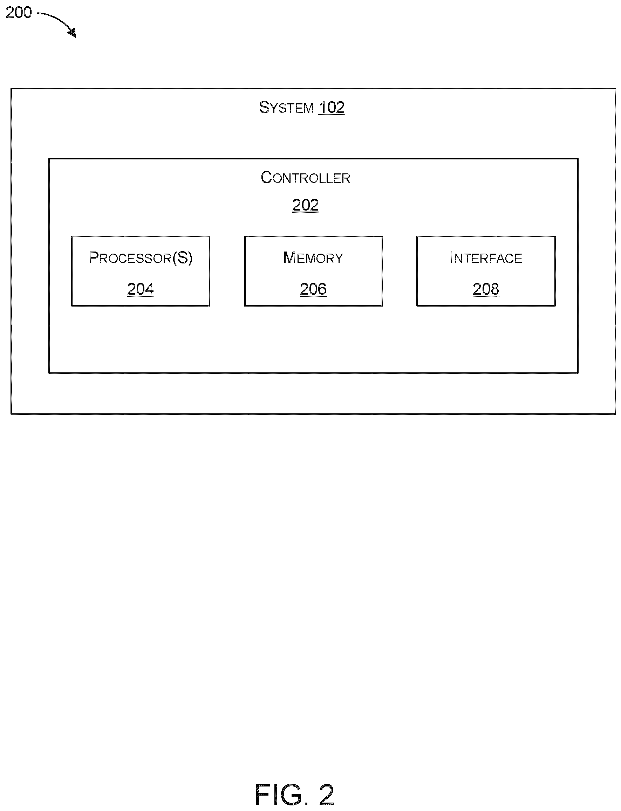

Referring to FIG. 2, in one or more embodiments, the system 102 may comprise a controller 202 (designated as 102 in FIG. 1). The controller may further comprise a processor 204 that may be implemented as one or more microprocessors, microcomputers, microcontrollers, digital signal processors, central processing units, logic circuitries, and/or any devices that process data based on operational instructions. Among other capabilities, the processor 204 may be configured to fetch and execute computer-readable instructions stored in a memory 206 of the system 102. The memory 206 may be configured to store one or more computer-readable instructions or routines in a non-transitory computer-readable storage medium, which may be fetched and executed to create or share data packets over a network service.

In one or more embodiments, the system 102 may include an interface 208. The interface 208 may comprise a variety of interfaces, for example, interfaces for data input and output (I/O) devices, storage devices, and the like. The interface 208 may also provide a communication pathway for one or more components of the system 102.

In one or more embodiments, the processor 204 may simultaneously receive the configuration utility instances related to one or more implementations made by the users through the computing devices 106. The processor 204 may implement a communication framework that facilitates secure communication among the configuration utility instances. The processor 204 may authenticate the configuration utility instances based on a registered identity of the users. The processor 204 may authenticate the configuration utility instances through the registered identity of the users. For example, the communication framework may authenticate the users based on the registered identity of the users with the centralized server 112. The users may be registered through the computing devices 106 connected over the network 108. The communication framework may identify all the configuration utility instances associated with the registered identity of the users.

In one or more embodiments, the processor 204 may identify a plurality of configuration utility instances among the configuration utility instances through the interrelated objects comprised in the plurality of configuration utility instances. Further, the processor 204 may compare the identified plurality of configuration utility instances to identify a variation of data among the interrelated objects. The processor 204 may be configured with a predefined logic that upon execution enables the processor 204 to identify the variation of the data among the plurality of configuration utility instances and presents the variation to the users. The interrelated objects may comprise an object structure for storing the data, so that the processor 204 writes a data value from the object structure to the other and merges the data. The processor 204 may compare and find the differences between the object structures using the predefined logic and write one data value from the object structure to the other to merge the data.

In one or more embodiments, the processor 204 may provide real-time notifications through the computing devices 106 to the users based on the identified variation and enable merging of the data based on an acknowledgment received from the users.

In one or more embodiments, the processor 204 may merge the data from the plurality of configuration utility instances to correspondingly sync the data between the plurality of configuration utility instances. The processor may 204 may merge the data based on an acknowledgment received from the one or more users. The processor 204 may communicate the synced data to the computing devices 106 associated with the users.

In one or more embodiments, the processor 204 may receive the configuration utility instances and record the configuration utility instances received for a predetermined period in a configuration project prior to merging the configuration utility instances. Further, the processor 204 may revert to any previous version of the configuration project based on a request made by the commissioning engineers through the computing devices 106. For example, if a recent version of the configuration project encounters an error, the previous version of the configuration project may be compared to the recent version for troubleshooting in real time.

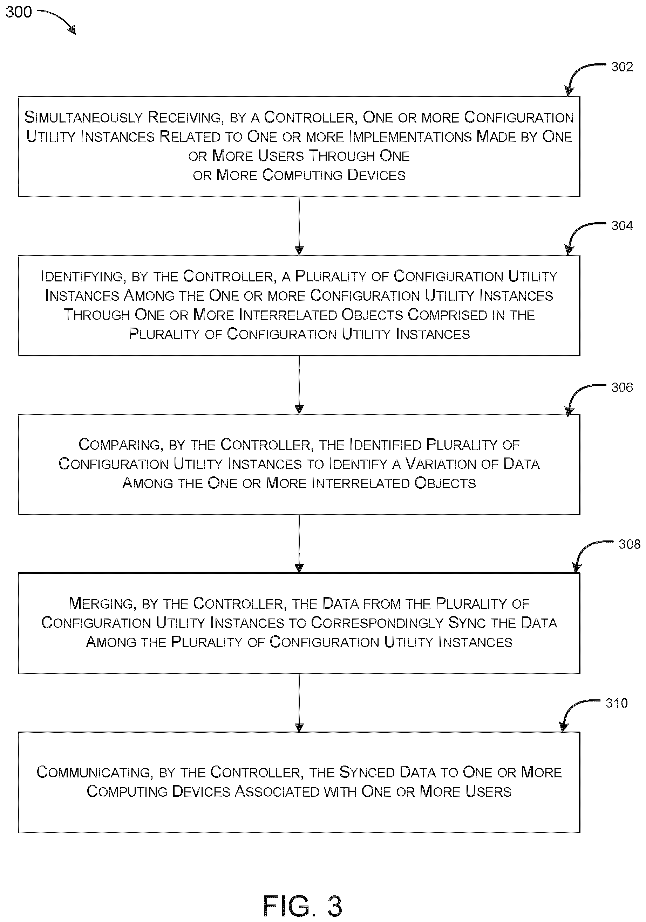

Referring to FIG. 3, the method flow diagram may include the following steps.

At step 302: The method may include simultaneously receiving, by the controller 202, the configuration utility instances related to implementations made by the users through the computing devices 106.

At step 304: The method may include identifying, by the controller 202, a plurality of configuration utility instances among the configuration utility instances through the interrelated objects comprised in the plurality of configuration utility instances.

At step 306: The method may include comparing, by the controller 202, the identified plurality of configuration utility instances to identify a variation of data among the interrelated objects.

At step 308: The method may include merging, by the controller 202, the data from the plurality of configuration utility instances to correspondingly synchronize the data among the plurality of configuration utility instances.

At step 310: The method may include communicating, by the controller 202, the synced data to the computing devices 106 associated with the users.

Thus, the invention provides an improved, efficient, and reliable solution to overcome the above-mentioned drawbacks, limitations, and shortcomings associated with existing fire panel system configurations. The invention provides parallel development of project configurations by more than one commissioning engineer and reduces a manual error around project merge and maintenance. The invention reduces the commissioning timeline occurring mainly in large-size sites such as airports, skyscrapers, and multi-building facilities. Further, the invention provides improved database conversion and downloads due to the parallelization of the configuration utility instances.

While the invention has been described with reference to exemplary embodiments, it will be understood by those skilled in the art that various changes may be made and equivalents may be substituted for elements of the described embdoiments without departing from the scope of the invention, as defined by the appended claims. Modifications may be made to adopt a particular situation or material to the teachings herein without departing from the scope of the invention. Therefore, it is intended that the invention not be limited to the particular embodiment disclosed, but that the invention includes all embodiments falling within the scope of the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

The following clauses set out aspects of the invention that may or may not presently be claimed, but which may form the basis for future amendment or a divisional application.
1. A system for integration of networked utility instances associated with a fire detection and alarm unit, the system comprising: a controller configured to receive one or more configuration utility instances related to one or more fire configuration panels associated with the fire detection and alarm unit, wherein one or more computing devices are communicatively coupled to the fire detection and alarm unit and each other through a network, the one or more computing devices configured to communicate the one or more configuration utility instances to the controller; and said controller is connected to the fire detection and alarm unit, the controller comprises a processor with access to a memory storing instructions executable by the processor, which causes the controller to: simultaneously receive the one or more configuration utility instances made by one or more users through the one or more computing devices; identify a plurality of configuration utility instances among the one or more configuration utility instances through one or more interrelated objects comprised in the plurality of configuration utility instances; compare the identified plurality of configuration utility instances to identify a variation of data among the one or more interrelated objects; merge the data from the plurality of configuration utility instances to correspondingly synchronize the data among the plurality of configuration utility instances; and communicate the synced data to one or more computing devices associated with one or more users.
2. The system of clause 1, wherein the controller is configured to: authenticate the one or more configuration utility instances based on a registered identity of the one or more users; and provide real-time notifications through the one or more computing devices to the one or more users based on the identified variation and enable merging of the data based on an acknowledgment received from the one or more users.
3. The system of clause 1 or 2, wherein the controller is configured with a predefined logic that upon execution enables the controller to identify the variation of the data among the plurality of configuration utility instances and presents the variation to the one or more users.
4. The system of clause 1, 2 or 3, wherein each of the one or more interrelated objects comprises an object structure for storing the data, so that the predefined logic writes a data value from the object structure to the other and merges the data.

## Claims

1. A system (102) for integration of networked utility instances, the system comprising:
a controller (104) connected to one or more devices and configured to receive one or more configuration utility instances related to the one or more devices,
wherein one or more computing devices (106) are communicatively coupled to the controller and each other through a network system (108) and configured to communicate the one or more configuration utility instances to the controller; and
wherein the controller comprises a processor (204) with access to a memory (206) storing instructions executable by the processor, which causes the controller to:
simultaneously receive the one or more configuration utility instances related to one or more implementations made by one or more users through the one or more computing devices;
identify a plurality of configuration utility instances among the one or more configuration utility instances through one or more interrelated objects comprised in the plurality of configuration utility instances;
compare the identified plurality of configuration utility instances to identify a variation of data among the one or more interrelated objects;
merge the data from the plurality of configuration utility instances to correspondingly synchronize the data among the plurality of configuration utility instances; and
communicate the synced data to the one or more computing devices associated with the one or more users.

2. The system of claim 1, wherein the controller is configured to provide real-time notifications through the one or more computing devices to the one or more users based on the identified variation and enable merging of the data based on an acknowledgment received from the one or more users.

3. The system of claim 1, wherein the controller is configured to implement a communication framework that establishes a secure communication between the one or more configuration utility instances.

4. The system of any one of claims 1 and 2, wherein the controller is configured to:
identify the plurality of configuration utility instances through the one or more interrelated objects;
enable comparison of the one or more interrelated objects to determine a difference in the data of the one or more interrelated objects; and
merge the data among the one or more interrelated objects based on the difference to correspondingly synchronize the data among the plurality of configuration utility instances.

5. The system of any one of claims 1 to 4, wherein the controller is configured with a predefined logic that upon execution enables the controller to identify the variation of the data among the plurality of configuration utility instances and presents the variation to the one or more users,
optionally wherein each of the one or more interrelated objects comprises an object structure for storing the data, so that the controller writes a data value from the object structure to the other and merges the data.

6. The system of any one of claims 1 to 5, wherein the controller is configured to authenticate the one or more configuration utility instances based on a registered identity of the one or more users.

7. The system of any one of claims 1 to 6, wherein the one or more devices comprise one or more fire configuration panels connected to each other through a platform where the one or more users implement one or more system configurations related to the one or more fire configuration panels through each of the one or more configuration utility instances; and/or
wherein a fire detection and alarm unit (110) associated with the networked utility instances comprises the one or more devices, and wherein the one or more computing devices are further communicatively coupled to the fire detection and alarm unit.

8. A method for integration of networked utility instances, the method comprising:
simultaneously receiving, by a controller (104), one or more configuration utility instances related to one or more implementations made by one or more users through one or more computing devices (106);
identifying, by the controller, a plurality of configuration utility instances among the one or more configuration utility instances through one or more interrelated objects comprised in the plurality of configuration utility instances;
comparing, by the controller, the identified plurality of configuration utility instances to identify a variation of data among the one or more interrelated objects;
merging, by the controller, the data from the plurality of configuration utility instances to correspondingly synchronize the data among the plurality of configuration utility instances; and
communicating, by the controller, the synced data to the one or more computing devices associated with the one or more users.

9. The method of claim 8, comprising providing, by the controller, real-time notifications to the one or more users through the one or more computing devices based on the identified variation and enabling merging of the data based on an acknowledgment received from the one or more users.

10. The method of any one of claims 8 and 9, comprising implementing, by the controller, a communication framework that facilitates secure communication between the one or more configuration utility instances.

11. The method of any one of claims 8 to 10, comprising:
identifying, by the controller, the plurality of configuration utility instances through the one or more interrelated objects;
enabling, by the controller, comparison of the one or more interrelated objects to determine a difference in the data of the one or more interrelated objects; and
merging, by the controller, the data among the one or more interrelated objects based on the difference to correspondingly synchronize the data among the plurality of configuration utility instances.

12. The method of any one of claims 8 to 11, comprising identifying, by the controller, a predefined logic that upon execution, enables the controller to identify the variation of the data among the plurality of configuration utility instances and presents the variation to the one or more users.

13. The method of any one of claims 8 to 12, wherein each of the one or more interrelated objects comprises an object structure for storing the data so that the controller writes a data value from one object structure to the other and merges the data.

14. The method of any one of claims 8 to 13, comprising authenticating, by the controller, the one or more configuration utility instances based on a registered identity of the one or more users.

15. The method of any one of claims 8 to 14, comprising implementing, by the one or more users one or more system configurations related to one or more fire configuration panels through each of the one or more configuration utility instances where each of the one or more devices comprise the one or more fire configuration panels connected to each other through a platform.
